(19) Europäisches Patentamt
European Patent Office
Office européen des brevets

(11) **EP 4 465 010 A1**

(12) **EUROPEAN PATENT APPLICATION**

(43) Date of publication:
**20.11.2024 Bulletin 2024/47**

(21) Application number: **23315204.0**

(22) Date of filing: **17.05.2023**

(51) International Patent Classification (IPC):
**G01M 11/00** (2006.01)   **G02F 1/01** (2006.01)
**G06N 3/08** (2023.01)

(52) Cooperative Patent Classification (CPC):
**G01M 11/00; G06N 3/0675; G06N 3/084;
G06N 3/09;** G06N 10/40

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicants:
• **Quandela
91300 Massy (FR)**
• **Centre National de la Recherche Scientifique
75794 Paris Cedex 16 (FR)**
• **Université Paris-Saclay
91190 Gif-sur-Yvette (FR)**

(72) Inventors:
• **SENELLART, Jean
91400 Orsay (FR)**
• **MARING, Nicolas
75020 Paris (FR)**
• **FYRILLAS, Andréas
94250 Gentilly (FR)**
• **BELABAS, Nadia
91240 Saint Michel sur Orge (FR)**

(74) Representative: **Yes My Patent
32 Boulevard Richard Lenoir
75011 Paris (FR)**

(54) **METHOD AND SYSTEM FOR CHARACTERIZATION OF A PHOTONIC CIRCUIT**

(57)     The invention concerns a method for characterization of a photonic circuit, comprising: an initial step (A), wherein the photonic circuit is provided, comprising at least one reconfigurable component to characterize and possibly at least one fixed component, each reconfigurable component being associated with at least one control parameter, each component being modelled by at least one characteristic value; an acquisition step (B), wherein data samples (DS) are acquired from measurements of at least one measurable output quantity on the photonic circuit; a machine-learning step (C), wherein the data samples (DS) are used in a machine-learning model, that determines a relation between: 1. the control parameter(s) of the reconfigurable component(s), 2. the characteristic value(s) of the fixed or reconfigurable component(s), and 3. the effect(s) of the component(s) on the measurable output quantity(ies); and possibly other characteristic value(s) of the photonic circuit; and an extraction step (D), wherein characteristic value(s) are extracted, based on results of the machine-learning step (C). The invention also concerns a system for implementing such a method.

Figure 11

**Description**

TECHNICAL FIELD OF THE INVENTION

The invention concerns a method for the characterizing of a photonic circuit and a system for implementing this method.

BACKGROUND OF THE INVENTION

Photonic circuits enable stable and compact light manipulation.

They are used with classical light for communications, sensing and broadband analogue signal processing. See for example Bogaerts et al., Programmable photonic circuits, Nature 586, 207-216 (2020).

They are also used with quantum light for circuit-based quantum communications (e.g. quantum key distribution), quantum information processing, boson sampling and quantum simulation. See for example Wang al., Integrated photonic quantum technologies, Nat. Photonics 14, 273-284 (2020).

Photonic circuits can have imperfections, such as crosstalk between components, imperfections in the directional couplers reflectivities, relative output losses, etc.

While manufacturers make efforts to reduce the amount of crosstalk by physical means (e.g. trenches around phase shifters to prevent heat diffusion), as the circuits grow in size and complexity while becoming more compact, there is a need for crosstalk characterization/calibration and compensation methods.

SUMMARY OF THE INVENTION

The aim of the invention is to provide an improved method for characterizing photonic circuits, in particular for quantum applications.

To this end, the invention concerns a method for characterization of a photonic circuit, comprising:

- an initial step (A), wherein the photonic circuit (10) is provided, comprising at least one reconfigurable component (12) to characterize and possibly at least one fixed component (14), each reconfigurable component (12) being associated with at least one control parameter (CP), each component (12, 14) being modelled by at least one characteristic value (CV);
- an acquisition step (B), wherein data samples (DS) are acquired from measurements of at least one measurable output quantity on the photonic circuit (10) ;
- a machine-learning step (C), wherein the data samples (DS) are used in a machine-learning model, that determines:

  • a relation between:

    1. the control parameter(s) (CP) of the reconfigurable component(s) (12),
    2. the characteristic value(s) (CV) of the fixed or reconfigurable component(s) (12, 14), and
    3. the effect(s) of the component(s) (12, 14) on the measurable output quantity(ies); and

  • possibly other characteristic value(s) (CV) of the photonic circuit (10); and

- an extraction step (D), wherein characteristic value(s) (CV) are extracted, based on results of the machine-learning step (C).

Thanks to the invention, imperfections on photonic circuits (10) can be mitigated. The machine-learning process can estimate appropriate values for the physical imperfections to compensate for their detrimental impact.

According to further aspects of the invention which are advantageous but not compulsory, such a method may incorporate one or several of the following features:

- The method can comprise a component-wise characterization substep, wherein individual characterization(s) (IC) of at least one of the component(s) (12, 14) is performed. In the machine-learning step (C), the individual characterization(s) (IC) and the data samples (DS) can then be used in the machine-learning model. The component-wise characterization substep is optional. If the component-wise characterization substep is not performed, the machine-learning model is initialized with specific or random initial characteristic values (CV).

- The reconfigurable component(s) (12) of the photonic circuit (10) can comprise at least one phase shifter. In the component-wise characterization substep, the individual characterization (IC) of the phase shifter can be performed as a relation between phase and a control parameter (CP), such as voltage or current.

- The fixed component(s) (14) of the photonic circuit (10) can comprise at least one directional coupler. In the component-wise characterization substep, the individual characterization of the directional coupler can be an estimation of a characteristic value, such as reflectivity.

- The discrete photonic circuit (10) can comprise phase shifters, directional couplers, or any other discrete optical component.

- The photonic circuit (10) can be free-space or integrated on a chip.

- The model can be coded in Python using the PyTorch package, or any other suitable machine-learning framework in any programming language.

- The characteristic values (CV) can be imperfections, including crosstalk between reconfigurable components, directional coupler reflectivities differing from target values, unbalanced input and/or output losses of the circuit.

- In the acquisition step (B), among the data samples (DS), each individual data sample can include an input configuration, comprising a list of one or several input port(s) used to input light in the photonic circuit (10) for this specific data sample (DS).
- In the acquisition step (B), among the data samples (DS), each individual data sample can include a set of values corresponding to the or each control parameter (CP) of the reconfigurable component(s) (12), such as voltage or current.
- In the acquisition step (B), among the data samples (DS), each individual data sample can include at least one measurable output quantity of the photonic circuit (10), such as single-photon counts, coincidence rates, laser power. The coincidence rates relate to the simultaneous single-photon detection on multiple detectors.
- In the acquisition step (B), the data samples can be separated into at least two distinct datasets : training samples, which are used to update the state of the machine-learning model; and test samples, which are used to monitor overfitting of the model on the training samples, by comparing predictions of the model with data not previously seen by the model.
- The machine-learning step (C) can comprise a training sub-step, wherein the data samples (DS) are evolved using standard backpropagation, such that a difference between model predictions and the data samples (DS) is minimized.
- The machine-learning step (C) can comprise a testing sub-step, configured to monitor if the model is overfitting, that is the model is trained too well on a dataset of training samples, to the point that the model becomes too specialized and loses its ability to generalize to unseen data. The model is evaluated on the testing samples to monitor if the model is overfitting.
- The machine-learning model can comprise a mathematical relation linking the control parameter(s) (CP) of the reconfigurable component(s) (12) to their physical effect(s), such as voltage to optical phase shift for thermo-optics phase shifters. The model can store the characteristic value(s) (CV) of the component(s) (12, 14) and other characteristic value(s) (CV) of the photonic circuit (10). The model can optimize the mathematical relation and the characteristic value(s) (CV) of the fixed components (14) and of the photonic circuit (10), during the machine-learning step (C) to replicate the data samples (DS).
- The mathematical relation can be a matrix relation.
- In the extraction step (D), characteristic value(s) (CV) of the photonic circuit (10), and in particular imperfections of the photonic circuit (10), can be extracted from the machine-learning model. In this embodiment, these characteristic values are the final results of the method.
- The extraction step (D) can be followed by a correction step, wherein the photonic circuit (10) receives a calibration mitigating imperfections and implementing accurate operations.

The invention also concerns a system (1) for characterization of a photonic circuit (10) according to the above method. The system comprises:

- the photonic circuit (10), comprising at least one reconfigurable component (12) and possibly at least one fixed component (14);
- at least one light source (20) positioned at the input of the photonic circuit (10);
- a detection device (30) positioned at the output of the photonic circuit (10);
- a computer unit (40), provided with a machine-learning model.

According to further aspects of the invention which are advantageous but not compulsory, such a system may incorporate one or several of the following features:

- The photonic circuit (10) can be a reconfigurable discrete-scheme photonic chip.
- The light source (20) can be a continuous-wave laser.
- The detection device (30) can be a powermeter array.
- The computer unit (40) can be a CPU, GPU, QPU, TPU, or any suitable unit.
- The system can comprise an optical switch (50) positioned between the light source (20) and the photonic circuit (10), the optical switch (50) being configured to automatically address different inputs of the photonic circuit (10).
- The system can be constructed as a quantum computer.

BRIEF DESCRIPTION OF THE DRAWINGS

The invention will now be explained in correspondence with the annexed figures, and as an illustrative example, without restricting the object of the invention. In the annexed figures:

- Figure 1 is a schematic representation of a component, more precisely a phase shifter.
- Figure 2 is a schematic representation of another component, more precisely a directional coupler.
- Figure 3 is a schematic representation of a photonic circuit, composed of a reconfigurable directional coupler.
- Figure 4 is a schematic representation of another photonic circuit, composed of two reconfigurable phase shifter and two fixed directional couplers.

- Figure 5 is an equation showing characteristic values of a reconfigurable phase shifter.
- Figure 6 is a schematic representation of a directional coupler, showing its characteristic value of reflectivity.
- Figure 7 is a schematic representation of a photonic circuit, comprising many phase shifters and directional couplers.
- Figure 8 is a schematic representation of crosstalk between directional couplers.
- Figure 9 is a schematic representation of imperfection of a directional coupler.
- Figure 10 is a schematic representation of output losses of a photonic circuit.
- Figure 11 is a flowchart of the method according to the invention.
- Figure 12 is a schematic representation of a system designed for implementing the method according to the invention.
- Figure 13 is a set of two graphs illustrating a component-wise characterization substep.
- Figure 14 is a flowchart illustrating a machine-learning step.
- Figure 15 is a diagram illustrating two substeps of training and testing of the machine-learning step.
- Figure 16 is a flowchart similar to Figure 14 and illustrating the extraction step.

DETAILED DESCRIPTION OF SOME EMBODIMENTS

In a discrete-scheme photonic circuit (10), each component acting on light is separately identified and localized. A circuit (10) is said to be reconfigurable, if at least one of its components can modify its effect on light.

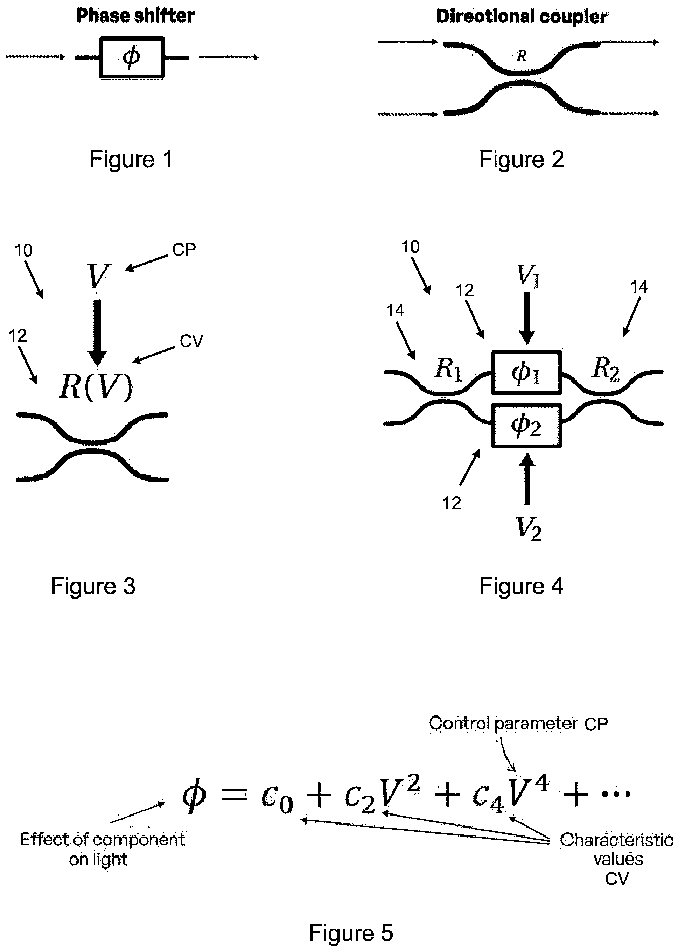

Figure 1 shows a first example of component: a phase shifter applies a phase shift $\Phi$ on the incoming light.

Figure 2 shows a second example of component: a directional coupler combines and splits incoming light. It is parametrized by its reflectivity R, which determines how the component reflects light.

We divide the components of the circuit (10) into two categories:

- Reconfigurable components (12), which can modify their action on light.
- Fixed components (14), which can not modify their action on light.

The state of reconfigurable components (12) is controlled by control parameters (CP). For example, for thermal phase shifters, the phase shift $\Phi$ value depends on the voltage V applied.

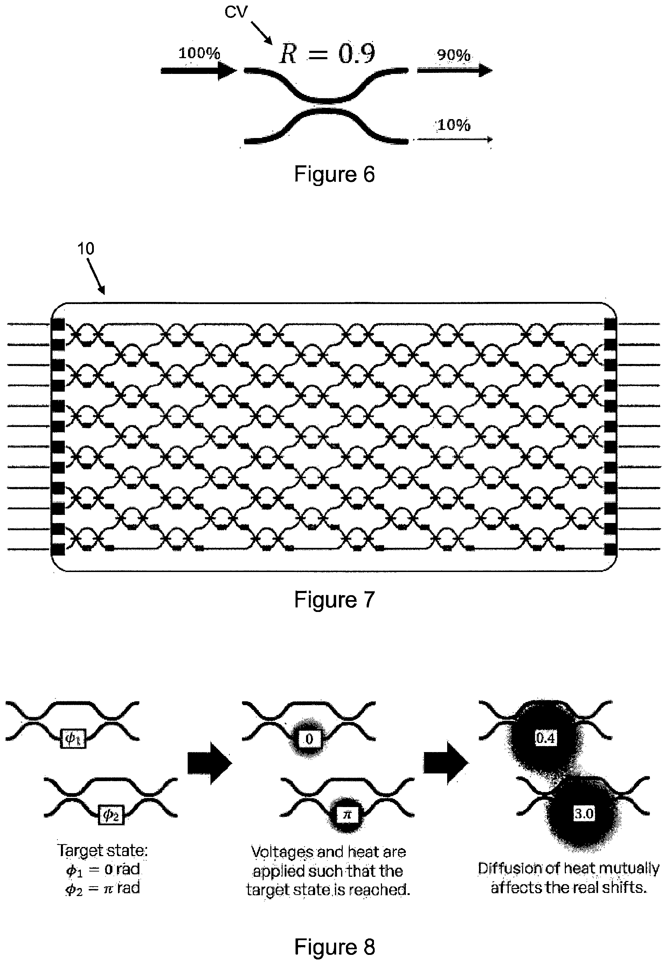

Within the scope of the invention, the discrete photonic circuit (10) comprises at least one reconfigurable component (12). In practice, the circuit (10) generally has a higher number of reconfigurable components (12), as in Figure 7. Indeed, it would not be very interesting to implement the method just for one or two reconfigurable components (12), as in Figures 3 and 4, but it is covered by the scope of the invention.

Figure 3 shows a first example of photonic circuit (10), composed of just one reconfigurable component (12), more precisely a reconfigurable directional coupler, that is a directional coupler whose reflectivity R can be controlled by applying voltage V.

Figure 4 shows a second example of photonic circuit (10), composed of:

- two reconfigurable components (12), more precisely two reconfigurable phase shifters controlled by voltages V1 and V2 respectively, and
- two fixed components (14), more precisely two fixed directional couplers of reflectivity R1 and R2.

Each component (12, 14) is modelled by a set of characteristic values (CV), that is one or several characteristic values (CV).

Figure 5 shows an example of characteristic value (CV) for a reconfigurable component (12): the phase-voltage relation of a thermo-optic phase shifter.

Figure 6 shows an example of characteristic value (CV) for a fixed component (14): the reflectivity R of the directional coupler, which determines how much light is sent into each direction.

The photonic circuit (10) itself can also be described by characteristic values (CV). For instance:

- Relative output transmissions
- Relative input transmissions

We consider a special case of a Reconfigurable Discrete-Scheme Photonic (RDSP) circuit (10), that is a circuit whose components can be phase shifters and beamsplitters, which can be fixed or not.

This special RSDP comprises:

- reconfigurable phase shifters controlled by voltage V: the characteristic values (CV) are the coefficients in the phase-voltage relation of individual components,
- fixed directional couplers: the characteristic values (CV) are the reflectivities R of individual components;
- relative output losses are the characteristic values (CV) of the circuit (10) itself.

Figure 7 shows such a RSDP circuit (10), comprising 122 phase shifters (12), that are the small rectangles, and 132 directional couplers (14), that are the crossings with a horizontal line. The light travels along the lines, from one side to the other side of the circuit (10), for example left to right.

The invention can be used for the mitigation of imperfections on RDSP circuits (10). Such imperfections comprise crosstalk between components (12, 14) of the circuit (10), imperfections in the directional couplers reflectivities, relative output losses, etc.

Figure 8 illustrates crosstalk between thermal phase shifters.

Regardless of the technology enabling reconfigurability (thermal, mechanical, electrical...), crosstalk is to be expected. Crosstalk prevents precise light manipulation and reduces the fidelity of the operations.

For the mitigation of this imperfection, we assume that the phase-voltage relation governing the behaviour of the phase shifters is of the general form:

$$\Phi(V) = C_0 + \sum_{k \geq 1} C_k V^{.k}$$

where $\Phi$ is the column vector containing all physically applied phase shifts $\Phi$,

     $V$ is the column vector containing all applied voltages V,
     .k represents element-wise exponentiation,
     $C_0$ is a vector,
     and $C_{k \geq 1}$ are matrices.

The physical interpretation of this formula is that individual phase shifters have phase-voltage relations of the form $\Phi(7) = c_0 + c_1 V + c_2 V^2 + ...$, but by generalizing this expression with matrices, we allow for crosstalk between them, because of the off-diagonal elements of the matrices.

To compensate for crosstalk, we only need to invert the relation to find $\phi(V)$. This can be achieved using standard numerical methods.

Notice that this approach is different from the Thermal Eigenmode Decomposition presented in Milanizadeh et al., Canceling Thermal Cross-Talk Effects in Photonic Integrated Circuits, Journal of Lightwave Technology 37, 1325-1332 (2019), where the authors link physical and target phases with a special matrix.

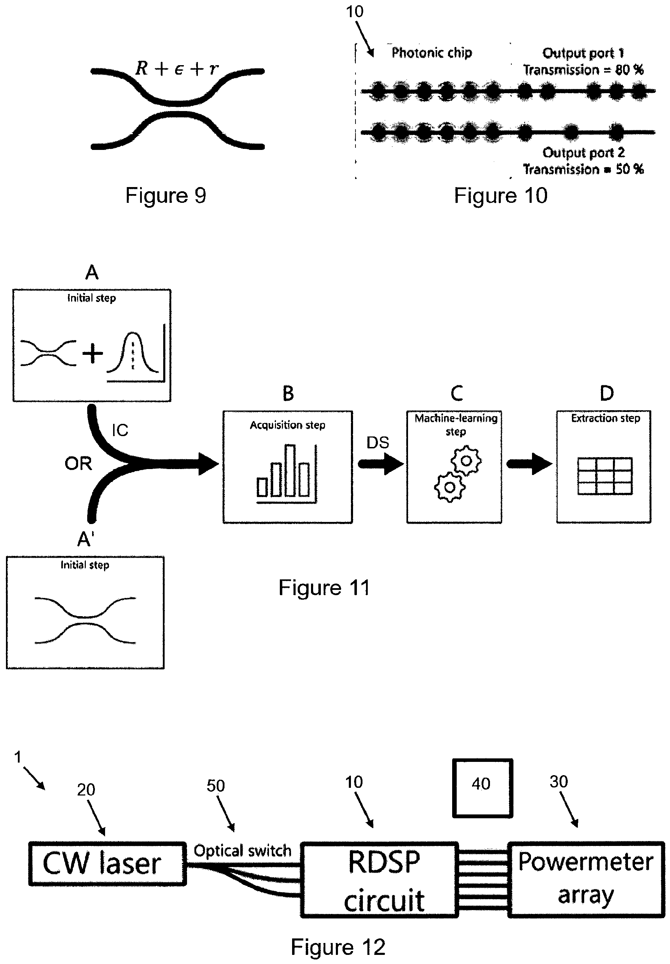

Figure 9 illustrates imperfections in directional coupler reflectivities. Fabrication errors introduce statistical errors $\varepsilon$ in the reflectivities of the couplers across the circuit. Systematic errors r arise when the light's wavelength is shifted. These imperfections severely limit the range of transformations that can be operated on light with the circuit.

For the mitigation of this imperfection, knowing the reflectivity of each individual directional couplers, Bandyopadhyay et al., Hardware error correction for programmable photonics, Optica, OPTICA 8, 1247-1255 (2021), propose a deterministic mitigation protocol, eliminating the need for standard optimization procedures previously described in Burgwal et al., Using an imperfect photonic network to implement random unitaries, Opt. Express, OE 25, 28236-28245 (2017).

Figure 10 illustrates relative output losses of the circuit. The circuit output ports do not transmit the same number of photons relative to each other. Its impact and mitigation are not well understood in the literature for now.

In any case, a crucial point for mitigating phase shifter crosstalk, directional coupler reflectivity imperfections or relative output losses, is to know the characteristic values (CV) of the components (12, 14) and the circuit (10).

The method according to the invention recovers the characteristic values (CV) using machine-learning.

Figure 11 is a flowchart illustrating the method according to the invention, for the characterization of a photonic circuit (10).

In the initial step (A), the process starts with a coarse component-wise characterization of the circuit (10). If done, it can be used to determine the form of the phase-shifter phase-voltage relation and also to give the machine-learning model a good initial state when it starts learning.

Alternately, in the initial step (A'), the process starts without component-wise characterization. The machine-learning model is initialized with specific or random values.

In step (B), we proceed by acquiring data samples (DS) on the circuit (10).

In step (C), these data samples (DS) are given to our machine-learning model, which is trained to replicate them.

In step (D), when the learning process is finished, the values for the parameters of interest are extracted from the model.

Figure 12 illustrates the experimental system (1) used to carry out the characterization method according to the invention.

System (1) comprises:

- a RDSP photonic circuit (10);
- a continuous-wave laser generator forming a light source (20), positioned at the input of the photonic circuit (10);
- a powermeter array forming a detection device (30), positioned at the output of the photonic circuit (10);
- a computer unit (40), provided with the machine-learning model;
- an optical switch (50) positioned between the light source (20) and the circuit (10).

The continuous-wave laser is injected into the circuit (10) to characterize. The output laser power is monitored by the powermeter array (30). The optional optical switch (50) allows to address automatically different circuit inputs.

Instead of a laser and powermeters, one can use a single-photon source and single-photon detectors.

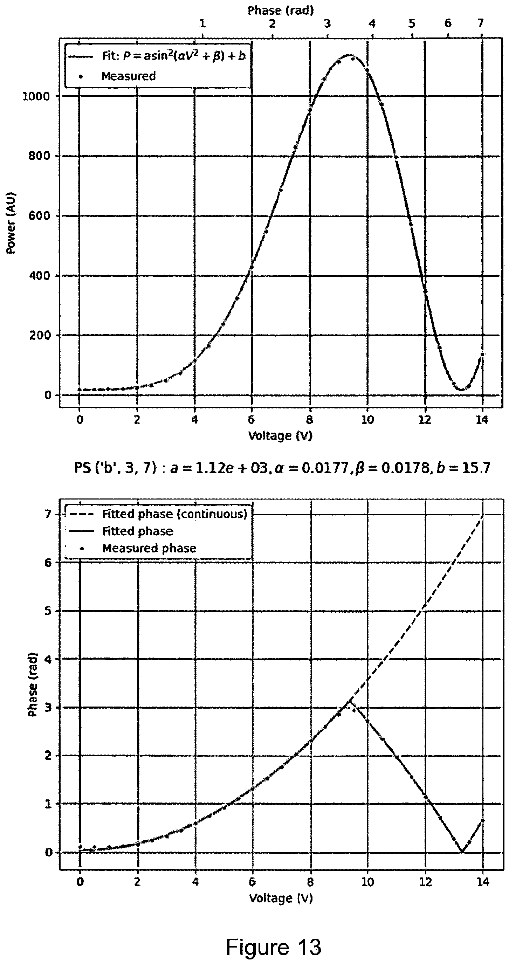

Figure 13 shows two graphs illustrating an exemple of initial step (A), including a component-wise characterization substep.

Each phase shifter is characterized separately from the others. For each phase shifter, the voltage V is swept from zero to a maximum voltage chosen by the operator. The interference fringe is recorded on the powermeters (left graph). From the fringe data, we can compute the phase shift Φ as a function of the voltage V applied (right graph).

The purpose of this component-wise characterization is twofold:

- We see the phase follows a relation of the form $\Phi(V) = C_0 + C_2 V^2$. As a result, we will instruct the machine-learning model to use a phase-voltage relation of the form:

$$\Phi(V) = C_0 + C_2 V^{.2}$$

.

- The $C_0$ and $C_2$ values found are used as an initial state for the machine-learning model learning process.

In the acquisition step (B), machine-learning denotes computer science methods where a program extrapolates information from a given set of data.

Our machine-learning method requires data samples (DS) to learn the behaviour of the circuit (10). We separate the samples into two sets:

- Training samples: 2 × number of parameters to learn.
- Testing samples: 0.5 × number of parameters to learn.

The samples are of the form:

- list of input ports,
- list of control parameters, such as list of voltages applied,
- list of measured powers.

For each new sample (DS), the voltages V applied on all the phase shifters are set to random values. The list of input ports specifies into which input ports light is injected to acquire this particular sample (DS). The set of input ports to address is chosen such that every directional coupler and phase shifter to characterize encounters light at least once. The number of data samples (DS) should be equally divided among the input ports. It is not necessary to change the input port for each new sample (DS): all samples associated to an input port can be acquired in one run.

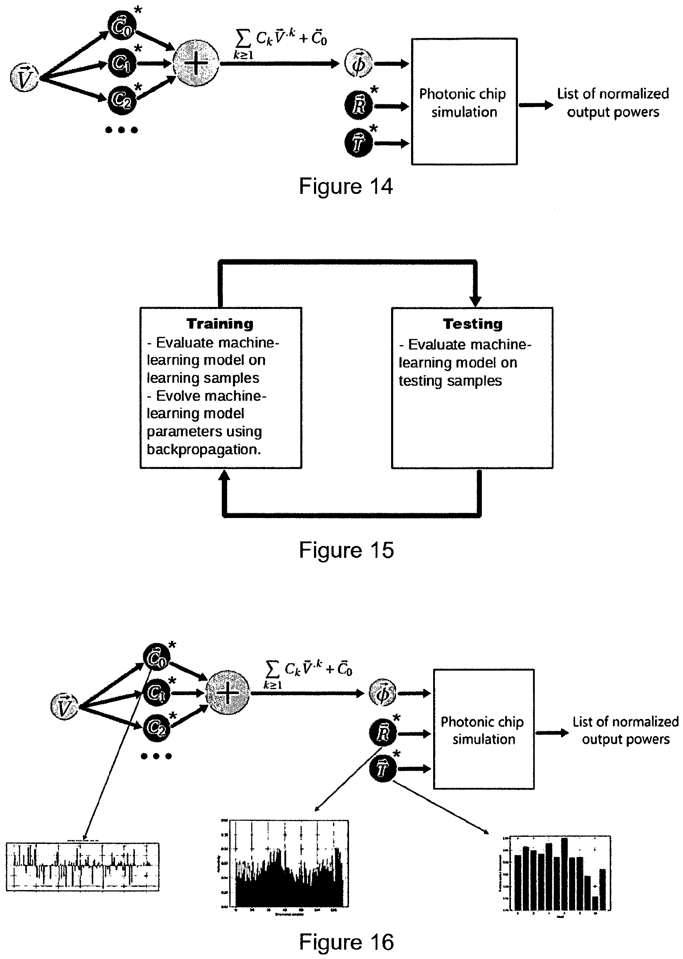

Figure 14 shows a flowchart illustrating an exemple of machine-learning step (C), wherein the machine-learning model is used to characterize a photonic circuit (10).

Parameters marked with asterisks represent characteristic values (CV) to learn. The model takes as input a list of voltages V that are applied on the circuit phase shifters. The form of the phase-voltage relation is chosen by the operator based on their knowledge of the components or after the component-wise characterization of step (A). Using the phase-voltage relation, the model predicts the phases Φ applied physically on the circuit (10), which are then passed to a simulation of the circuit (10), along the parameters $R$ and $T$, the column vectors containing the reflectivities and output port transmissions. The model then outputs the corresponding list of laser powers (normalized such that it sums to 1).

The model used in the expertiment coded in Python using the PyTorch package.

For the extraction step (D), the characteristic values (CV) marked with asterisks are directly accessible.

Figure 15 illustrates the machine-learning step (C) including the repetition of two substeps: training and testing. During the training substep, the model is evaluated on the training samples and its parameters (phase-voltage relation, DC reflectivities, output losses) are evolved using standard backpropagation, such that the difference between the model predictions and the samples is minimized. In the testing substep, the model is evaluated on the testing samples to monitor if the model is overfitting.

Figure 16 shows a flowchart illustrating the extraction step (D). Due to the nature of the machine-learning model, the estimated characteristic values (CV) can be simply extracted and directly used for the intended application.

After having trained the machine-learning model, we extract the phase-voltage relation and use it to implement 300 randomly chosen phase configurations. We compare the resulting power distributions with theoretical predictions. The average difference is only 3 %.

To compare, if we do this test with the data from the component-wise characterization, that is without crosstalk compensation, the average difference is 20%.

Other non-shown and non-described embodiments can be implemented within the scope of the invention, defined by the set of claims. In addition, technical features of the different embodiments can be, in whole or part, combined with each other. Thus, the method and system (1) can be adapted to the specific requirements of the application.

**Claims**

1. **Method for characterization of a photonic circuit, comprising:**

   - an initial step (A), wherein the photonic circuit (10) is provided, comprising at least one reconfigurable component (12) to characterize and possibly at least one fixed component (14), each reconfigurable component (12) being associated with at least one control parameter (CP), each component (12, 14) being modelled by at least one characteristic value (CV);
- an acquisition step (B), wherein data samples (DS) are acquired from measurements of at least one measurable output quantity on the photonic circuit (10) ;
- a machine-learning step (C), wherein the data samples (DS) are used in a machine-learning model, that determines:

• a relation between :

1. the control parameter(s) (CP) of the reconfigurable component(s) (12),
2. the characteristic value(s) (CV) of the fixed or reconfigurable component(s) (12, 14), and
3. the effect(s) of the component(s) (12, 14) on the measurable output quantity(ies); and

• possibly other characteristic value(s) (CV) of the photonic circuit (10); and

- an extraction step (D), wherein characteristic value(s) (CV) are extracted, based on results of the machine-learning step (C).

2. **Method according to claim 1,** comprising a component-wise characterization substep, wherein individual characterization(s) (IC) of at least one of the component(s) (12, 14) is performed, and wherein in the machine-learning step (C), the individual characterization(s) (IC) and the data samples (DS) are used in the machine-learning model.

3. **Method according to claim 2,** wherein the reconfigurable component(s) (12) of the photonic circuit (10) comprise at least one phase shifter, and wherein in the component-wise characterization substep, the individual characterization (IC) of the phase shifter is performed as a relation between phase and a control parameter (CP), such as voltage or current.

4. **Method according to any of claims 2 or 3,** wherein the fixed component(s) (14) of the photonic circuit (10) comprise at least one directional coupler, and wherein in the component-wise characterization substep, the individual characterization of the directional coupler is an estimation of a characteristic value, such as reflectivity.

5. **Method according to any one of claims 1 to 4,** wherein in the acquisition step (B), among the data samples (DS), each individual data sample includes an input configuration, comprising a list of one or several input port(s) used to input light in the photonic circuit (10) for this specific data sample (DS).

6. **Method according to any one of claims 1 to 5,** wherein in the acquisition step (B), among the data samples (DS), each individual data sample includes a set of values corresponding to the or each control parameter (CP) of the reconfigurable component(s) (12), such as voltage or current.

7. **Method according to any one of claims 1 to 6,** wherein in the acquisition step (B), among the data samples (DS), each individual data sample includes at least one measurable output quantity of the photonic circuit (10), such as single-photon count, coincidence rates, laser power.

8. **Method according to any one of claims 1 to 7,** wherein in the acquisition step (B), the data samples (DS) are separated into at least two distinct datasets :

- training samples, which are used to update the state of the machine-learning model; and
- test samples, which are used to monitor overfitting of the model on the training samples, by comparing predictions of the model with data not previously seen by the model.

9. **Method according to any one of the previous claims 1 to 8,** wherein the machine-learning step (C) comprises a training sub-step, wherein the data samples (DS) are evolved using standard backpropagation, such that a difference between model predictions and the data samples (DS) is minimized.

10. **Method according to any one of claims 1 to 9,** wherein the machine-learning step (C) comprises a testing sub-step, configured to monitor if the model is overfitting, that is the model is trained too well on a dataset of training samples, to the point that the model becomes too specialized and loses its ability to generalize to unseen data.

11. **Method according to any one of claims 1 to 10,** wherein the machine-learning model comprises a mathematical relation linking the control parameter(s) (CP) of the reconfigurable component(s) (12) to their physical effect(s), such as voltage to phase shift for thermal phase shifters, wherein the model also stores the characteristic value(s) (CV) of the component(s) (12, 14) and other characteristic value(s) (CV) of the photonic circuit (10), and wherein the model optimizes the mathematical relation and the characteristic value(s) (CV) of the fixed components (14) and of the photonic circuit (10), during the machine-learning step (C) to replicate the data samples (DS).

12. **Method according to any one of claims 1 to 11,** wherein in the extraction step (D), characteristic value(s) (CV) of the photonic circuit (10), and in particular imperfections of the photonic circuit (10), are extracted from the machine-learning model.

13. **System (1) for characterization of a photonic circuit (10), according to the method of any of claims 1 to 12, comprising:**

   - the photonic circuit (10), comprising at least one reconfigurable component (12) and possibly at least one fixed component (14);
   - at least one light source (20) positioned at the input of the photonic circuit (10);
   - a detection device (30) positioned at the output of the photonic circuit (10);
   - a computer unit (40), provided with a machine-learning model.

14. **System according to claim 13,** comprising an optical switch (50) positioned between the light source (20) and the photonic circuit (10), the optical switch (50) being configured to automatically address different inputs of the photonic circuit (10).

15. **System according to any one of claims 13 or 14,** constructed as a quantum computer.

**Phase shifter**

Figure 1

**Directional coupler**

Figure 2

Figure 3

Figure 4

Control parameter CP

$$\phi = c_0 + c_2 V^2 + c_4 V^4 + \cdots$$

Effect of component on light

Characteristic values CV

Figure 5

Figure 6

Figure 7

Target state:
$\phi_1 = 0$ rad
$\phi_2 = \pi$ rad

Voltages and heat are applied such that the target state is reached.

Diffusion of heat mutually affects the real shifts.

Figure 8

10

Photonic chip

Output port 1
Transmission = 80 %

Output port 2
Transmission = 50 %

Figure 9

Figure 10

A

Initial step

$R + \epsilon + r$

IC

OR

A'

Initial step

B

Acquisition step

DS

C

Machine-learning
step

D

Extraction step

Figure 11

1

20

50

10

40

30

CW laser

Optical switch

RDSP
circuit

Powermeter
array

Figure 12

PS ('b', 3, 7) : $a = 1.12e + 03, \alpha = 0.0177, \beta = 0.0178, b = 15.7$

Figure 13

$$\sum_{k \geq 1} C_k \vec{V}^{\cdot k} + \vec{C}_0$$

Figure 14

**Training**
- Evaluate machine-learning model on learning samples
- Evolve machine-learning model parameters using backpropagation.

**Testing**
- Evaluate machine-learning model on testing samples

Figure 15

$$\sum_{k \geq 1} C_k \vec{V}^{\cdot k} + \vec{C}_0$$

Figure 16

Europäisches
Patentamt

European
Patent Office

Office européen
des brevets

# EUROPEAN SEARCH REPORT

Application Number

EP 23 31 5204

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2022/065743 A1 (SIMARD ALEXANDRE D [CA] ET AL) 3 March 2022 (2022-03-03) * the whole document * | 1-15 | INV. G01M11/00 G02F1/01 G06N3/08 |
| A | US 2019/250212 A1 (LE MAITRE PATRICK [FR] ET AL) 15 August 2019 (2019-08-15) * the whole document * | 1-15 | |
| A | US 5 406 072 A (TAYLOR EDWARD W [US]) 11 April 1995 (1995-04-11) * the whole document * | 1-15 | |
| A | CN 114 638 793 A (SHENZHEN FLASH BACK SCIENCE AND TECH LIMITED COMPANY) 17 June 2022 (2022-06-17) * the whole document * | 1-15 | |

TECHNICAL FIELDS
SEARCHED      (IPC)

G01M
G06N
G02F

The present search report has been drawn up for all claims

| Place of search | Date of completion of the search | Examiner |
|---|---|---|
| The Hague | 31 October 2023 | Gruss, Christian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 .......................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 31 5204

This annex lists the patent family members relating to the patent documents cited in the above-mentioned European search report.
The members are as contained in the European Patent Office EDP file on
The European Patent Office is in no way liable for these particulars which are merely given for the purpose of information.

31-10-2023

| Patent document cited in search report | | Publication date | Patent family member(s) | | Publication date |
|---|---|---|---|---|---|
| US 2022065743 | A1 | 03-03-2022 | US | 2022065743 A1 | 03-03-2022 |
| | | | US | 2023003614 A1 | 05-01-2023 |
| US 2019250212 | A1 | 15-08-2019 | CN | 110161636 A | 23-08-2019 |
| | | | CN | 209728245 U | 03-12-2019 |
| | | | FR | 3077887 A1 | 16-08-2019 |
| | | | US | 2019250212 A1 | 15-08-2019 |
| US 5406072 | A | 11-04-1995 | NONE | | |
| CN 114638793 | A | 17-06-2022 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **BOGAERTS et al.** Programmable photonic circuits. *Nature,* 2020, vol. 586, 207-216
- **WANG.** Integrated photonic quantum technologies. *Nat. Photonics,* 2020, vol. 14, 273-284
- **MILANIZADEH et al.** Canceling Thermal Cross-Talk Effects in Photonic Integrated Circuits. *Journal of Lightwave Technology,* 2019, vol. 37, 1325-1332

- **BANDYOPADHYAY et al.** Hardware error correction for programmable photonics. *Optica, OPTICA,* 2021, vol. 8, 1247-1255
- **BURGWAL et al.** Using an imperfect photonic network to implement random unitaries. *Opt. Express, OE,* 2017, vol. 25, 28236-28245